# FASCICULE DE BREVET EUROPEEN

(11) **EP 1 382 869 B1**
(45) Date de publication et mention de la délivrance du brevet: **28.09.2005**
(21) Numéro de dépôt: 03291580.3
(22) Date de dépôt: 27.06.2003
(51) Int. Cl.: F16C 35/06

(54) **Montage d'étanchéité de roulement, notamment d'axe de réducteur**
Dichtungsanordnung in einem Lager, insbesondere für eine Getriebeachse
Sealed bearing assembly, in particular for geared axis

(30) Priorité: 11.07.2002 FR 0208722
(43) Date de publication de la demande: 21.01.2004
(73) Titulaire: SNR ROULEMENTS, F-74000 Annecy (FR)
(72) Inventeur: Zanette, Walter, 74940 Annecy Le Vieux (FR)
(74) Mandataire: Cémeli, Eric Philippe Laurent

(56) Documents cités:
- EP-A- 0 562 218
- DE-A- 2 839 584
- US-A- 4 240 680

## Description

La présente invention concerne les montages de roulements et plus particulièrement les montages de roulements pour axe de réducteur de bétonnière transportée sur camion. Le réducteur est lié au châssis du camion par son carter alors que la bétonnière est reliée au réducteur par un flasque supportant les bagues intérieures du roulement faisant l'objet de l'invention.

Les roulements de ce type sont, de façon connue, des roulements oscillants à une bague extérieure, deux rangées de corps roulants et deux bagues intérieures. Afin de permettre un certain débattement de la bétonnière par rapport au camion et de s'adapter ainsi à toutes les conditions de roulage du camion, on a donné une forme sphérique au diamètre extérieur de la bague extérieure du roulement.

L'étanchéité du réducteur est assurée d'une part par un joint torique qui porte sur le diamètre extérieur sphérique de la bague extérieure du roulement et d'autre part par un joint à lèvre monté sur la bague extérieure et frottant sur un épaulement du flasque supportant les bagues intérieures. Or, afin de permettre le débattement du flasque par rapport au carter du réducteur, le diamètre extérieur de la bague extérieure du roulement est phosphaté, ce qui rend la surface très abrasive. Le joint torique est ainsi très rapidement usé et perd donc de son efficacité.

La publication EP0562218 décrit et représente un roulement monté dans un palier à semelle. Ce roulement a deux rangées de corps roulants et possède une bague extérieure dont le chemin est sphérique, ce qui autorise un certain débattement de cette bague extérieure par rapport à la bague intérieure. De chaque côté du roulement, deux joints ont été montés sur respectivement deux bagues, solidaires de l'axe et dont le diamètre extérieur est sphérique. Un tel système présente l'inconvénient de ne pas assurer une étanchéité optimale. Un autre inconvénient découle du fait que le chemin de la bague extérieure soit sphérique. Dans cette configuration, des charges combinées à composante axiale prédominante ne pourront être supportés.

Un montage de roulement similaire au sujet de la revendication 1 est décrit dans le document DE-A-2839584.

Un des objectifs de l'invention est donc de fournir un roulement susceptible d'être utilisé dans les conditions de charge citées ci-dessus, représentatives des efforts subis par le réducteur entre le camion et la bétonnière, un second objectif de l'invention étant d'assurer une étanchéité optimale et durable.

Pour répondre à ces objectifs, l'invention propose un montage de roulement ayant les caractéristiques de la revendication 1.

Dans le but de supporter des charges axiales importantes, les chemins de roulement sont de type à contact oblique de manière à coopérer avec les corps roulants de type billes.

Selon une caractéristique de la présente invention, la rondelle est réalisée dans un alliage inoxydable.

Un objectif supplémentaire de l'invention est la simplification du montage du roulement. Dans ce sens, une rondelle s'étend vers les corps roulants et forme un chemin de roulement sur lequel une rangée de corps roulant prend appui. Ladite rondelle subit alors un traitement apte à rendre inoxydable la surface supportant le joint.

Afin de réaliser l'étanchéité sans toutefois être soumis aux mouvements relatifs des pièces, un joint torique est placé entre la rondelle et le manchon axial du flasque, ce joint torique étant alors en appui d'une part contre la forme chanfreinée de l'extrémité inférieure de la rondelle et d'autre part contre le rayon de raccordement du manchon axial et de l'épaulement du flasque.

Selon une caractéristique de la présente invention, le côté, orienté vers la rondelle, de la bague extérieure du roulement est sensiblement confondu avec un plan transversal perpendiculaire à l'axe de révolution du roulement et tangent à l'extrémité de la bille correspondant à ce côté.

L'invention porte également sur un réducteur, notamment de bétonnière, caractérisé en ce qu'il comporte un tel montage de roulement.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un montage de roulement selon l'état de la technique,
- la figure 2 est une vue en coupe d'un montage de roulement selon un premier mode de réalisation de l'invention,
- la figure 3 est une vue en coupe d'un montage de roulement selon un deuxième mode de réalisation de l'invention.

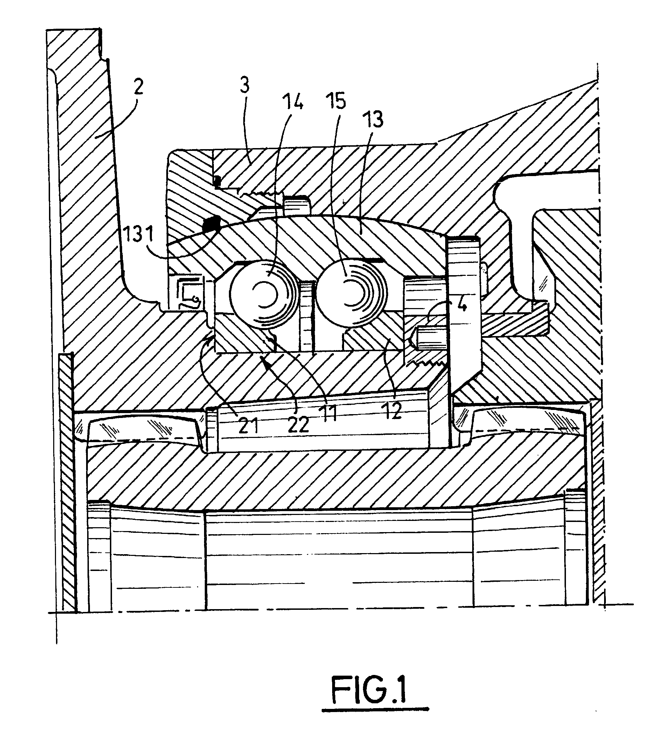

Un montage de roulement 1, implanté dans un réducteur de bétonnière de façon connue, est représenté à la figure 1. Le réducteur de bétonnière est réalisé par un train d'engrenages dont seul les engrenages finaux sont représentés sur cette figure. Un axe du réducteur porte un premier engrenage, entraîné en rotation par un planétaire du réducteur, et un deuxième engrenage, entraînant en rotation un flasque 2 vissé sur la bétonnière. Ce flasque 2 comporte un manchon axial 22 s'étendant vers l'intérieur du réducteur et supportant les bagues intérieures 11 et 12 du roulement 1 faisant l'objet de l'invention. La bague extérieure 13 de ce roulement 1, dont les corps roulants sont composés de deux rangées de billes 14 et 15, a un profil extérieur 131 de forme sphérique. Ce profil 131 est complémentaire de la forme du carter 3 sur lequel la bague extérieure 13 vient reposer. L'arrêt en translation d'un tel roulement 1 est réalisé d'une part par un épaulement 21 du flasque 2 sur lequel vient s'appuyer la bague intérieure 11 correspondante, et d'autre part par un moyen d'arrêt connu du type écrou 4 venant arrêter l'autre bague intérieure 12. Il sera compris qu'une bague intérieure unique 11, portant les deux pistes de roulement, pourra être utilisée pour le montage selon l'invention.

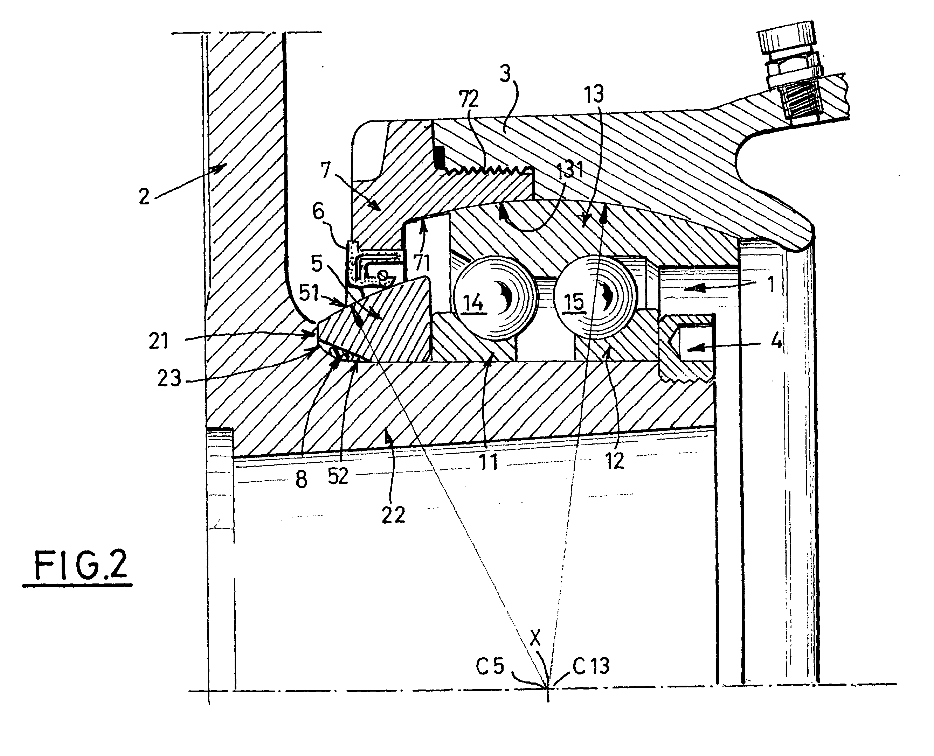

Selon un premier mode de réalisation représenté à la figure 2, le roulement 1 est pourvu de chemins à contact oblique afin de supporter des charges axiales importantes.

Une rondelle 5 est interposée entre l'épaulement 21 du flasque 2 et la bague intérieure 11 correspondante. La périphérie extérieure 51 de cette rondelle 5 présente une forme de portion de sphère et constitue une zone de frottement pour un joint d'étanchéité 6, par exemple à lèvre et à ressort.

La position de l'ensemble, formé par la rondelle 5 et le joint d'étanchéité 6, et le rayon de la sphère correspondant à la périphérie extérieure 51 de la rondelle 5 sont choisis de telle sorte que le centre C₅ de cette sphère soit confondu avec le centre C₁₃ de la sphère correspondant au profil extérieur 131 de la bague extérieure 13 du roulement 1. Une telle concordance permet de garder le contact entre le joint d'étanchéité 6 et la rondelle 5 quel que soit le degré d'oscillation de la bague extérieure 13 du roulement 1 autour d'un axe X.

Le joint d'étanchéité 6 est monté dans un couvercle 7 dont le prolongement axial, vers l'intérieur du réducteur, vient reposer sur le profil extérieur 131 de la bague extérieure 13 du roulement 1. Ce prolongement axial comporte donc d'une part un profil intérieur 71 de forme sphérique complémentaire à la forme sphérique du profil extérieur 131 de la bague extérieure 13 du roulement 1, les centres C de chaque sphère correspondante étant également confondus, et d'autre part un profil extérieur 72 permettant le montage serré sur le carter 3 du réducteur.

La présence cumulée de la rondelle sphérique 5, supportant le joint d'étanchéité 6, et du couvercle 7, dans lequel est monté ledit joint 6, impose une configuration tronquée de la bague extérieure 13 du roulement 1. Le roulement 1 ne présente plus de symétrie et le côté correspondant à la rondelle 5 est sensiblement confondu avec un plan transversal perpendiculaire à l'axe de révolution du roulement 1 et tangent à l'extrémité de la bille 14 correspondant à ce côté.

Un joint torique 8 est utilisé pour réaliser l'étanchéité entre la rondelle 5 et le manchon axial 22. Ce joint 8 est placé contre le rayon de raccordement 23 du flasque 2 et la forme chanfreinée 52 de l'extrémité intérieure de la rondelle 5 assure sa mise en position. Le joint torique 8 n'est donc soumis à aucun mouvement relatif puisque la rondelle 5 est montée solidairement sur le manchon axial 22.

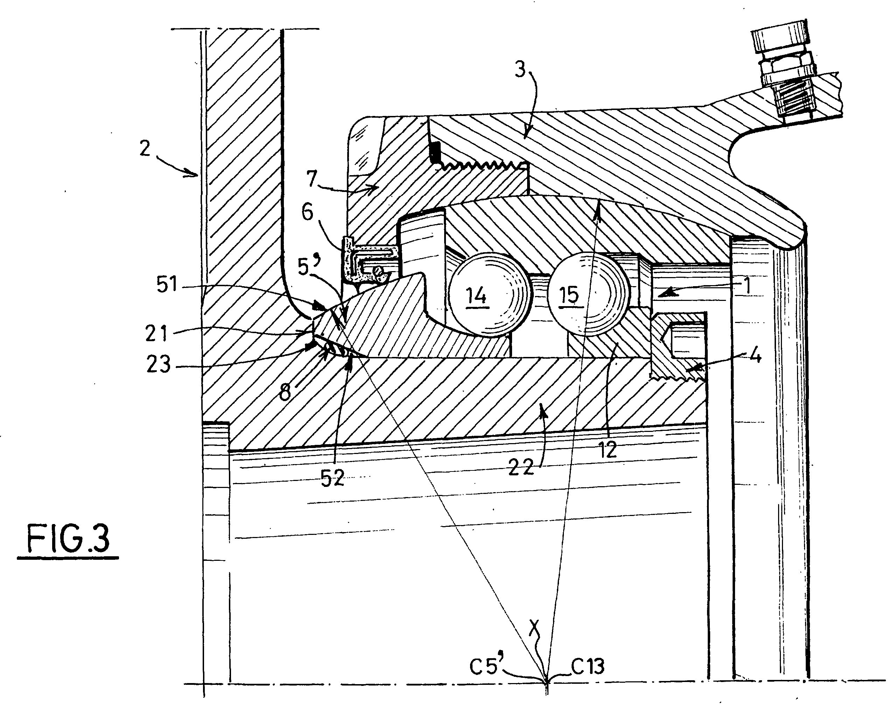

Selon un deuxième mode de réalisation représenté à la figure 3, la rondelle sphérique 5' s'étend le long du flasque 2 vers l'intérieur du réducteur et forme un chemin de roulement sur lequel la rangée de corps roulant 14 correspondante prend appui. Une seule pièce 5' englobe alors les fonctions de support de joint d'étanchéité 6 et de guidage des corps roulants 14. Le montage, et plus particulièrement la mise en position du joint torique 8 par l'emmanchement de la rondelle 5', est alors simplifiée.

Dans les différents modes de réalisation décrits ci-dessus de manière non exhaustive, la rondelle 5, 5' doit présenter une surface d'appui du joint d'étanchéité 6 telle qu'elle ne soit pas oxydée, ce qui entraînerait une usure rapide des lèvres du joint 6 et donc une perte d'étanchéité. Dans le cas représenté à la figure 2, la rondelle 5 sera réalisée préférentiellement dans un alliage inoxydable. Dans le cas représenté à la figure 3, il pourra être pratiqué un traitement de surface de la périphérie sphérique sur laquelle porte le joint 6 afin d'éviter, lors des projections d'eau, l'oxydation de cette surface. Seule la surface de la rondelle 5' portant le joint 6 sera alors traitée, l'acier inoxydable étant peu compatible avec la fonction de roulement et notamment avec les charges subies par le montage.

## Revendications

1. Montage de roulement (1), par exemple pour réducteur de bétonnière, du type comportant une bague extérieure (13) à profil extérieur (131) sphérique, solidaire d'un carter (3) du réducteur, et au moins une bague intérieure (11) concentriques, solidaire d'un manchon axial (22) d'un flasque (2), munies respectivement de chemins de roulement, ledit montage comportant un joint (6) frottant sur le profil extérieur (51) sphérique d'une rondelle (5, 5'), le centre (C₅ , C_{5'}) de ladite sphère étant confondu avec le centre (C₁₃) de la sphère correspondante au profil extérieur (131) de la bague extérieure (13), **caractérisé en ce que** le joint (6) est monté dans un couvercle (7) reposant axialement sur la bague extérieure (13) du roulement (1), le diamètre intérieur de ce couvercle (7) présentant un profil sphérique (71) complémentaire du profil extérieur (131) sphérique de la bague extérieure (13) du roulement (1).

2. Montage de roulement selon la revendication 1, **caractérisé en ce que** la rondelle (5) est réalisée dans un alliage inoxydable.

3. Montage de roulement selon la revendication 1 ou 2, **caractérisé en ce que** la rondelle (5') s'étend vers les corps roulants (14 et 15) et forme un chemin de roulement sur lequel une rangée de corps roulant (14) prend appui.

4. Montage de roulement selon la revendication 3, **caractérisé en ce que** la surface, portant le joint (6), de la rondelle (5') est rendue inoxydable.

5. Montage de roulement selon l'une des revendications précédentes, **caractérisé en ce que** les chemins de roulement sont de type à contact oblique.

6. Montage de roulement selon l'une des revendications précédentes, **caractérisé en ce qu'**un joint torique (8) est placé entre le manchon axial (22) et la rondelle (5, 5').

7. Montage de roulement selon la revendication 6, **caractérisé en ce que** le joint torique (8) est en appui contre un rayon de raccordement (23) du manchon axial (22) et d'un épaulement (21) du flasque (2), la forme chanfreinée (52) de l'extrémité inférieure de la rondelle (5, 5') assurant sa mise en position.

8. Montage de roulement selon l'une des revendications précédentes, **caractérisé en ce que** le côté, orienté vers la rondelle (5, 5'), de la bague extérieure (13) du roulement (1) est sensiblement confondu avec un plan transversal perpendiculaire à l'axe de révolution du roulement (1) et tangent à l'extrémité de la bille (14) correspondant à ce côté.

9. Réducteur notamment de bétonnière, **caractérisé en ce qu'**il comporte un montage de roulement (1) tel que décrit dans l'une des revendications précédentes.

## Patentansprüche

1. Lageranordnung (1), z.B. für ein Untersetzungsgetriebe eines Betonmischers, von der Art, welche einen äußeren Ring (13) mit einem äußeren, kugelförmigen Profil (131) aufweist, der fest mit einem Gehäuse (3) des Untersetzungsgetriebes verbunden ist, und mindestens einen inneren, konzentrischen Ring (11), der fest mit einer axialen Muffe (22) eines Flansches (2) verbunden ist, die jeweils mit Lagerbahnen ausgestattet sind, wobei die Anordnung eine Dichtung (6) umfasst, die auf dem kugelförmigen, äußeren (51) Profil einer Unterlegscheibe (5, 5') schleift, wobei der Mittelpunkt (C₅, C_{5'}) der Kugel mit dem Mittelpunkt (C₁₃) der entsprechenden Kugel des äußeren Profils (131) des äußeren Rings (13) zusammenfällt, **dadurch gekennzeichnet, dass** die Dichtung (6) in einem Deckel (7) montiert ist, welcher axial auf dem äußeren Ring (13) des Lagers (1) ruht, wobei der innere Durchmesser dieses Deckels (7) ein kugelförmiges Profil (71) komplementär zum äußeren, kugelförmigen Profil (131) des äußeren Rings (13) des Lagers (1) aufweist.

2. Lageranordnung nach Anspruch 1, **dadurch gekennzeichnet, dass** die Unterlegscheibe (5) aus einer nicht-rostenden Legierung realisiert ist.

3. Lageranordnung nach Anspruch 1 oder 2, **dadurch gekennzeichnet, dass** die Unterlegscheibe (5') sich in Richtung zu den Rollkörpern (14 und 15) erstreckt und eine Lagerbahn bildet, auf welcher eine Reihe von Rollkörpern (14) anliegt.

4. Lageranordnung nach Anspruch 3, **dadurch gekennzeichnet, dass** die Oberfläche der Unterlegscheibe (5'), welche die Dichtung (6) trägt, nichtrostend gemacht ist.

5. Lageranordnung nach einem der vorangegangenen Ansprüche, **dadurch gekennzeichnet, dass** die Lagerbahnen vom Typ mit schrägem Kontakt sind.

6. Lageranordnung nach einem der vorangegangenen Ansprüche, **dadurch gekennzeichnet, dass** eine O-Ring-Dichtung (8) zwischen die axiale Muffe (22) und die Unterlegscheibe (5, 5') gesetzt ist.

7. Lageranordnung nach Anspruch 6, **dadurch gekennzeichnet, dass** die O-Ring-Dichtung (8) gegen einen Sitzradius (23) der axialen Muffe (22) und einer Schulter (21) des Flansches (2) anliegt, wobei die abgeschrägte Form (52) des unteren Endes der Unterlegscheibe (5, 5') ihre Positionierung sicherstellt.

8. Lageranordnung nach einem der vorangegangenen Ansprüche, **dadurch gekennzeichnet, dass** die Seite des äußeren Rings (13) des Lagers (1), welche in Richtung zur Unterlegscheibe (5, 5') gerichtet ist, im Wesentlichen mit einer transversalen Ebene rechtwinklig zur Drehachse des Lagers (1) zusammenfällt und tangierend mit dem Ende der dieser Seite entsprechenden Kugel (14).

9. Untersetzungsgetriebe, insbesondere für einen Betonmischer, **dadurch gekennzeichnet, dass** es eine Lageranordnung (1) aufweist, wie sie in einem der vorangegangenen Ansprüche beschrieben ist.

## Claims

1. A bearing assembly (1), for instance for a concrete mixer reducing gear, of the type comprising an outer ring (13) with a spherical external profile (131), rigid with a casing (3) of the reducing gear, and at least one concentric inner ring (11) rigid with an axial sleeve (22) of a flange (2), provided respectively with raceways, the assembly comprising a joint (6) in frictional contact with the outer spherical profile (51) of a washer (5, 5'), the centre (C₅, C_{5'}) of the sphere being merged with the centre (C₁₃) of the sphere corresponding to the external profile (131) of the outer ring (13), **characterised in that** the joint (6) is mounted in a cover (7) resting axially on the outer ring (13) of the bearing (1), the inner diameter of this cover (7) having a spherical profile (71) complementary with the external profile (131) of the outer ring (13) of the bearing (1).

2. A bearing assembly as claimed in claim 1, **characterised in that** the washer (5) is made from a non-oxidising alloy.

3. A bearing assembly as claimed in claim 1 or 2, **characterised in that** the washer (5') extends towards the rolling bodies (14 and 15) and forms a raceway on which a row of rolling bodies (14) bears.

4. A bearing assembly as claimed in claim 3, **characterised in that** the surface of the washer (5') bearing the joint (6) is made non-oxidising.

5. A bearing assembly as claimed in one of the preceding claims, **characterised in that** the raceways are of the oblique contact type.

6. A bearing assembly as claimed in one of the preceding claims, **characterised in that** an O-ring joint (8) is disposed between the axial sleeve (22) and the washer (5, 5').

7. A bearing assembly as claimed in claim 6, **characterised in that** the O-ring joint (8) bears against a radius of connection (23) of the axial sleeve (22) and a shoulder (21) of the flange (2), the chamfered shape (52) of the lower end of the washer (5, 5') ensuring its positioning.

8. A bearing assembly as claimed in one of the preceding claims, **characterised in that** the side, oriented towards the washer (5. 5'), of the outer ring (13) of the bearing (1) is substantially merged with a transverse plane perpendicular to the axis of revolution of the bearing (1) and tangential to the end of the ball (14) corresponding to this side.

9. A reducing gear, in particular for a concrete mixer, **characterised in that** it comprises a bearing assembly (1) as described in one of the preceding claims.
